# EUROPÄISCHE PATENTANMELDUNG

(11) **EP 1 797 777 A1**
(43) Veröffentlichungstag der Anmeldung: **20.06.2007**
(21) Anmeldenummer: 05792853.3
(22) Anmeldetag: 05.09.2005
(51) Int. Cl.: A23L 2/54, A23L 2/02, A23L 2/38

(54) **VERFAHREN ZUR HERSTELLUNG VON GETRÄNKEN**

(30) Priorität: 10.09.2004 RU 2004127002
(71) Anmelder: Kutyev, Anatoly Anatolyevich, Moscow, 117133 (RU)
(72) Erfinder: Kutyev, Anatoly Anatolyevich, Moscow, 117133 (RU)
(74) Vertreter: Jeck, Anton
(86) Internationale Anmeldenummer: PCT/RU2005/000450
(87) Internationale Veröffentlichungsnummer: WO 2006/031154

(57) **Zusammenfassung**

Die Erfindung betrifft die Lebensmittelindustrie, insbesondere die Herstellungstechnologie alkoholfreier Getränke, die über "belustigende" Eigenschaften verfügen. Das Getränk gemäß der Erfindung weist eine flüssige Basis und Stickstoffdioxid in einer Menge auf, die mindestens 40 g/l der flüssigen Basis beträgt. Das Verfahren gemäß der Erfindung zur Herstellung dieses Getränks besteht darin, dass das Gas bei einer Temperatur von 1-25° C und einem Druck von 1-21 atm der flüssigen Basis zugeführt wird. Die Erfindung ermöglicht, die Qualität des Endprodukts unter Aufrechterhaltung des Geschmacks und des Aromas des Endprodukts während einer bestimmten Lagerzeit zu verbessern.

## Beschreibung

Die Erfindung betrifft die Lebensmittelindustrie, insbesondere die Herstellungstechnologie alkoholfreier Getränke, die über "belustigende" Eigenschaften verfügen.

Aus dem Stand der Technik ist ein Verfahren zur Herstellung von Heilwasser bekannt, das die Eisherstellung aus Ursprungswasser durch Einfrieren von Wasserdampf umfasst, der aus dem Ursprungswasser bei einer Temperatur von höchstens 10° C entsteht, aufgetaut und gesammelt wird, wobei das Eis zum Auftauen mit Ultraviolett- und Infrarotstrahlung bearbeitet wird und das Tauwasser mit einem Gas oder Gasgemisch angereichert wird. Als Gas wird Kohlensäuregas und/oder ein Gemisch aus diesem und dem Edelgas Xenon empfohlen (s. RU2010772 C1, C02F9/00, Veröffentlichung am 15.04.1994).

Bekannt ist auch ein Verfahren zur Bearbeitung von Mineralwasser und eines Getränkes auf dessen Basis, das eine Belüftung der Flüssigkeit mit einem Gemisch, das das Edelgas Argon enthält, und ein Abfüllen und Verschließen in einer Verpackung vorsieht, wobei der Argongehalt im Gasgemisch auf mindestens 3 Vol.-% gehalten wird und eine Bearbeitung bis zum Konzentrationsgleichgewicht des Gases in der Flüssigkeit durchgeführt wird (s. RU 2218055 C2, A23L2/54, Veröffentlichung 10.12.2003).

Die Nachteile beider Verfahren sind die energieintensive und komplexe Herstellung der Getränke und damit die hohen Selbstkosten.

Der am nächsten kommende Prototyp ist ein Verfahren zur Herstellung eines Getränks, das eine Einbringung von Stickstoffdioxid in eine flüssige Basis vorsieht, für die Wasser verwendet wird, (s. RU 92010834 A, Veröffentlichung am 27.03.1995).

Der Nachteil dieses Verfahrens ist, dass es nur zur Herstellung eines Getränkes benutzt wird, um die gute Stimmung aufrechtzuerhalten, d. h. eine "berauschende und belustigende" Wirkung zu erzeugen.

Die Aufgabe der vorliegenden Erfindung besteht darin, ein Verfahren zur Getränkeherstellung, bei dem Stickstoffdioxid in eine flüssige Basis eingebracht wird, anzugeben, bei dem die Qualität hinsichtlich der Aufrechterhaltung der Geschmacks-und Aromaeigenschaften im Laufe der Aufbewahrung erhöht ist.

Diese Aufgabe wird dadurch gelöst, dass das Verfahren zur Getränkeherstellung die Einbringung des Stickstoffdioxids in einer Menge von höchstens 40 g pro 1 I flüssige Basis bei einer Temperatur von 1-25° C und unter einem Druck von 1-21 atm vorsieht.

Das Verfahren ist ferner dadurch gekennzeichnet, dass als flüssige Basis entweder Mineral- oder Trinkwasser oder Saft verwendet werden. Ferner kann das Getränk mit Sauerstoff oder Kohlensäuregas angereichert werden. Ferner können Zucker bzw. Süßstoffe, Vitamine, Spurenelemente und medizinische Präparate eingebracht werden. Schließlich kann ein Vitaminmix aus Vitaminen A, B₁, B₂, B₆, B₁₂, D, E, Folsäure, Calcium-D-Pantothenat (Vitamin B₃), Nikotinsäure (Vitamin PP), Biotin, Askorbinsäure bzw. Natriumaskorbat verwendet werden, wobei der Reihe nach folgende Grammmenge vorgesehen sind: 2,0-8,0; 0,02-0,06; 30,0-40,0; 4,0-10,0; 4,0-8,0; 4,0-10,0; 0,01-0,03; 1,0-4,0; 25,0-35,0; 60,0-70,0; 0,5-1,0 und 300,0-400,0.

Das Ziel der Erfindung ist, ein Getränk zu schaffen, das nicht die Nachteile der für alkoholhaltige Getränke auf Spiritusbasis charakteristischen Getränke aufweist. Außerdem ist das Verfahren gemäß der Erfindung wirtschaftlich und umweltfreundlich, d. h. es gibt keine schädlichen Emissionen, und es werden keine teuren Anlagen und kein großer Energieverbrauch benötigt, wie dies bei der Spirituosenherstellung der Fall ist. Das Getränk nach dem Verfahren gemäß der Erfindung verfügt über besondere organoleptische Eigenschaften, schmeckt gut und ist nicht gesundheitsschädlich (für Leber, Magen, Gefäßsystem usw.). Der Technologie ist die Aufgabe zugrunde gelegt, ein Getränk, das aus flüssiger Basis mit darin gelöstem Stickstoffdioxid besteht, mit berauschender und belustigender Wirkung auf den Konsumenten bereitzustellen.

Stickstoffdioxid ist ein farbloses Gas mit leichtem, angenehmen Geruch, süßlichem Geschmack, und es ist schwerer als Luft (relative Dichte 1,527) sowie in einem Verhältnis von 1:2 wasserlöslich. Unter einer Temperatur von 0° C und einem Druck von 30 atm wird es zu einer farblosen Flüssigkeit verdickt.

### Das erfindungsgemäße Verfahren wird in folgender Weise ausgeführt:

Die flüssige Basis wird nach Standardtechnologie aufbereitet. Als Basis kann dabei Mineral- bzw. Trinkwasser oder Saft verwendet werden. Trinkwasser als flüssige Basis wird zuerst gereinigt, geklärt, desinfiziert und von Eisen befreit. Die Desinfektion erfolgt durch Filtern, Chloren, Ozonisieren und durch Bearbeiten mit Silberionen, Bakterizidstrahlung oder Ultraschallwellen. Das Wasser wird auch bis auf den benötigten Salzgehalt enthärtet. Wenn als flüssige Basis Fruchtsäfte (Orangen-, Zitronen-, Apfel-, Pampelmusen-, Mangosaft u. a. oder deren Gemisch) verwendet werden, werden diese dem Verschnittbehälter vorab gefiltert zugeführt. Bei der Verwendung von Saftkonzentraten werden diese gefiltert und dann auf die Konzentration der Ausgangssäfte gebracht. Danach wird in die flüssige Basis das Stickstoffdioxid mit höchstens 40 g pro 1 I flüssige Basis unter einer Temperatur von 1-25° C und einem Druck von 1-21 atm eingebracht.

Vor dem Einbringen des Stickstoffdioxids kann in die flüssige Basis zusätzlich Zucker als Zuckersirup oder Süßstoffe, beispielsweise Aspartam, Stewiosid, Sweetly, Riosan u. a., eingebracht werden. Vitamine können auch eingebracht werden, beispielsweise Vitamin B oder C. Danach werden unter Rühren nacheinander Spurenelemente, wie Eisen, Kalzium, Mangan u. a., eingebracht. In die flüssige Basis werden zusätzlich medizinische Präparate als Vitaminmix von A, B₁, B₂, B₆, B₁₂, D, E, Folsäure, Kalzium-D-Pantothenat (B₃), Nikotinsäure (PP), Biotin, Askorbinsäure oder Natriumaskorbat eingebracht, wobei der Reihe nach folgende Grammmengen vorgesehen sind: 2,0-8,0; 0,02-0,06; 30,0-40,0; 4,0-10,0; 4,0-8,0; 4,0-10,0; 0,01-0,03; 1,0-4,0; 25,0-35,0; 60,0-70,0; 0,5-1,0 und 300,0-400,0.

Der somit gewonnene Verschnitt wird sorgfältig innerhalb von 10-14 Minuten gerührt, gefiltert und in seinem Volumen bis zur vorgegebenen Menge durch Zugabe flüssiger Basis gebracht. Das gewonnene Getränk kann mit Kohlenstoffdioxid oder Sauerstoff bzw. einem Gemisch daraus angereichert und danach abgefüllt werden.

### Beispiel 1

Das Getränk wird wie oben beschrieben aufbereitet. Es werden folgende Zutaten pro 1 I flüssige Basis verwendet:
Stickstoffdioxid 5 g,
   der Rest ist flüssige Basis.

### Beispiel 2

Das Getränk wird nach Beispiel 1 aufbereitet mit folgender Zusammensetzung:
Stickstoffdioxid 4 g,
Vitamin B12, Menge 5 mg,
Rest Mineralwasser mittlerer Mineralisation.

### Beispiel 3

Das Getränk wird nach Beispiel 1 aufbereitet mit folgender Zusammensetzung:
Stickstoffdioxid 8 g,
Vitamin C 150 mg,
Eisen 1,1 mg,
Rest Trinkwasser.

### Beispiel 4

Das Getränk wird nach Beispiel 1 aufbereitet mit folgender Zusammensetzung:
Stickstoffdioxid 7 g,
Medizinisches Präparat 430,53 g,
Zink 0,5 mg,
Rest Orangensaft;
Das medizinische Präparat stellt dabei ein Gemisch aus 2,0 g Vitamin A, 0,02 g Vitamin B₁, 30,0 g Vitamin B₂, 4,0 g Vitamin B₆, 4,0 g Vitamin B₁₂, 4,0 g Vitamin D, 0,01 g Vitamin E, 1,0 g Folsäure, 25,0 g Calcium-D-Pantothenat (Vitamin B₃), 60,0 g Nikotinsäure (Vitamin PP), 0,5 g Biotin und 300 g Askorbinsäure oder Natriumaskorbat dar.

### Beispiel 5

Das Getränk wird nach Beispiel 1 aufbereitet mit folgender Zusammensetzung:
Stickstoffdioxid 7 g,
Medizinisches Präparat 586,09 g,
Zink 0,5 mg,
Rest Orangensaft;
   das medizinische Präparat stellt dabei ein Gemisch aus 8,0 g Vitamin A, 0,06 g Vitamin B₁, 40,0 g Vitamin B₂, 10,0 g Vitamin B₆, 8,0 g Vitamin B₁₂, 10,0 g Vitamin D, 0,03 g Vitamin E, 4,0 g Folsäure, 35,5 g Kalzium-D-Pantothenat (Vitamin B₃), 70,0 g Nikotinsäure (Vitamin PP), 1,0 g Biotin und 400 g Askorbinsäure oder Natriumaskorbat dar.

Das Verfahren gemäß der Erfindung zur Getränkherstellung sichert eine Geschmacks- und Aromaaufrechterhaltung in der Lagerzeit. Die Lagerdauer beträgt 1-1,5 Jahre im Vergleich zum Prototyp. Außerdem ist das Verfahren umweltfreundlich, d. h. ohne schädliche Emissionen, und braucht keine teure Anlagen und keinen großen Energieverbrauch.

## Patentansprüche

1. Verfahren zur Getränkeherstellung, bei dem Stickstoffdioxid in eine flüssige Basis eingebracht wird,
**dadurch gekennzeichnet**,
das das Stickstoffdioxid in einer Menge von höchstens 40 g pro 1 l flüssige Basis unter einer Temperatur von 1-25° C und einem Druck von 1-21 atm eingebracht wird.

2. Verfahren nach Anspruch 1,
**dadurch gekennzeichnet,**
**dass** als flüssige Basis Mineral- bzw. Trinkwasser oder Saft verwendet wird.

3. Verfahren nach Anspruch 1,
**dadurch gekennzeichnet,**
**dass** das Getränk zusätzlich mit Sauerstoff bzw. Kohlensäuregas oder mit einem Gemisch daraus angereichert wird.

4. Verfahren nach Anspruch 1,
**dadurch gekennzeichnet,**
**dass** zusätzlich Zucker oder Süßstoffe in das Getränk eingebracht werden.

5. Verfahren nach Anspruch 1,
**dadurch gekennzeichnet,**
**dass** zusätzlich Vitamine und Spurenelemente in das Getränk eingebracht werden.

6. Verfahren nach Anspruch 1,
**dadurch gekennzeichnet,**
**dass** zusätzlich ein Vitaminmix aus A, B₁, B₂, B₆, B₁₂, D, E, Folsäure, Kalzium-O-Pantothenat (B₃), Nikotinsäure (PP), Biotin, Askorbinsäure oder Natriumaskorbat in das Getränk eingebracht wird, wobei der Reihe nach folgende Grammmengen vorgesehen sind: 2,0-8,0; 0,02-0,06; 30,0-40,0; 4,0-10,0; 4,0-8,0; 4,0-10,0; 0,01-0,03; 1,0-4,0; 25,0-35,0; 60,0-70,0; 0,5-1,0 und 300,0-400,0.
